# EUROPÄISCHE PATENTSCHRIFT

(11) **EP 0 638 448 B1**
(45) Veröffentlichungstag und Bekanntmachung des Hinweises auf die Patenterteilung: **16.10.1996**
(21) Anmeldenummer: 94110530.6
(22) Anmeldetag: 06.07.1994
(51) Int. Cl.: B60G 7/02, B62D 17/00

(54) **Lageveränderliche Anlenkung mit einer Schraubbolzen-Mutterverbindung, insbesondere für Radlenker von Kraftfahrzeugen**
Variable-position nut-and-bolt attachment, in particular for motor vehicle suspension arms
Articulation à position variable avec une connexion boulon-écrou, en particulier pour bras de suspension de véhicules automobiles

(30) Priorität: 12.08.1993 DE 4327021
(43) Veröffentlichungstag der Anmeldung: 15.02.1995
(73) Patentinhaber: MERCEDES-BENZ AG, 70327 Stuttgart (DE)
(72) Erfinder: Burkhard, Walter, D-71088 Holzgerlingen (DE); Ulrich, Ewald, D-71409 Schwaikheim (DE); Reichelt, Helmut, D-73770 Denkendorf (DE)

(56) Entgegenhaltungen:
- DE-A- 3 200 879
- DE-C- 4 206 415
- FR-A- 1 554 338
- GB-A- 2 244 034
- US-A- 4 736 964
- US-A- 5 044 659

## Beschreibung

Die Erfindung betrifft eine lageveränderliche Anlenkung mit einer Schraubbolzen-Mutterverbindung, insbesondere für Radlenker von Kraftfahrzeugen gemäß dem Oberbegriff des Anspruches 1.

Lageveränderliche Anlenkungen der vorgenannten Art sind z. B. in der Anlenkung von Radlenkern für Kraftfahrzeuge üblich, um ausgehend von einer bei der Serienmontage angestrebten Mittellage nach beiden Seiten abweichende exzentrische Lagen fixieren zu können. Angestrebt wird dies unter anderem, um nach leichteren Karambolagen, wie einer heftigen Bordsteinberührung eingetretene Veränderungen in Sturz und Nachlauf soweit korrigieren zu können, daß das im Rahmen der Serienfertigung und für ein sicheres Betriebsverhalten erlaubte Toleranzfeld für Nachlauf und Sturz wieder eingehalten wird. Ansonsten würden solche Korrekturen Eingriffe in die Karosserie, z.B. durch Nachrichten derselben bedingen, was nach größeren Unfällen auch erforderlich ist, was aber bei solchen kleineren Karambolagen einen unvertretbaren Aufwand bedeuten würde.

Die genannten Nachstellmöglichkeiten bedingen für die Serienmontage zumindest eine kopfseitige Zentrierung, beispielsweise durch Exzenterscheiben oder dgl., bevorzugt werden derartige Zentrierungen aber kopf- und mutterseitig vorgenommen.

Hierfür bekannte Einstellvorrichtungen bedingen bereits für die Serienmontage eine Einstellung mit entsprechender Justierung innerhalb des Toleranzfeldes. Hierdurch sind Montagefehler nicht auszuschließen. Darüberhinaus ist der Aufwand für solche Anlenkungen relativ hoch.

Dokument GB-A-2244034, des eine Anlenkung nach dem Oberegriff des Anspruchs 1 offenbart, zeigt dazu eine Beilagscheibe zur Einstellung der Anlenkung bei der Serienmontage.

Der Erfindung liegt die Aufgabe zugrunde, eine lageveränderliche Anlenkung zu schaffen, die vereinfachte Einstellmöglichkeiten für Sturz und Nachlauf bietet und zudem das Fehlerrisiko für die Serienmontage verringert.

Erfindungsgemäß wird dies durch die kennzeichnenden Merkmale des Anspruches 1 erreicht.

Die erfindungsgemäße Langlochführung ergibt bei Anordnung im mutterseitigen Schenkel der Halterung die Möglichkeit, die Zentrierung auf die Mittellage kopfseitig im Rahmen der Erfindung beispielsweise durch einen kopfseitigen Formansatz zu erreichen, der in das Langloch eingreift. Sie gibt aber auch die Möglichkeit, bei Anordnung in beiden Schenkeln über die Langlochführung eine Zentrierung des Schraubbolzens kopf- und mutterseitig zu erreichen.

Abweichungen von der Mittellage, also eine Verlagerung des Schraubbolzens in die eine oder andere seiner Endlagen sind bei der erfindungsgemäßen Ausbildung der Langlochführung dadurch möglich, daß dem Schraubbolzen bezogen auf das jeweilige, mit den Zentriernasen ausgerüstete Langloch eine entsprechende Auskerbung zugeordnet wird. Wird der Schraubbolzen so eingesetzt, daß sich Auskerbung und Nut überdecken, so ist der Schraubbolzen innerhalb des Langloches bis zur Abstützung des Nasenrückens im Kerbgrund seitlich zu verschieben, und es ist die jeweilige Endlage dadurch in einfacher Weise fixierbar, daß der Bolzen in Gegenrichtung durch ein in das Langloch eingreifendes Formstück abgestützt wird. Dieses Formstück kann beispielsweise durch einen einer Beilagscheibe zugeordneten Formansatz, beispielsweise eine Ausprägung der Beilagscheibe gebildet sein.

Grundsätzlich ist es im Rahmen der Erfindung möglich, für die Serienmontage und den Reparaturfall gleiche Formbolzen zu verwenden, sofern den Formbolzen eine entsprechende Verdrehsicherung zugeordnet wird. Eine besonders einfache Lösung besteht aber auch darin, daß nunmehr für die Serienmontage ein herkömmlicher Schraubbolzen ohne besondere Kopfausformung oder dgl. verwendet werden kann und daß für den Reparaturfall ein Schraubbolzen mit den entsprechenden Auskerbungen eingesetzt wird, dem Beilagscheiben mit entsprechendem Formansatz zugeordnet sind. Da der Formansatz an der Beilagscheibe einseitig ist, kann durch Verdrehen der Beilagscheibe und entsprechendes Einsetzen des Bolzens unter Verwendung gleicher Beilagscheiben und gleicher Bolzen jede der beiden Endlagen in einfacher Weise fixiert werden.

Die Erfindung wird im folgenden anhand eines Ausführungsbeispieles näher erläutert, das in
- Fig. 1: schematisch dargestellt, die grundsätzliche Anordnung eines Radführungslenkers mit Lagerung in zwei Konsolen zeigt, in
- Fig. 2: eine perspektivische Darstellung einer Konsole mit erfindungsgemäßer Ausbildung des Langloches lediglich auf der Mutterseite,
- Fig. 3: einen Schraubbolzen mit einseitigem, kopfseitig vorgesehenem Formansatz und gegenüberliegend zum Formansatz im Gewindebereich vorgesehener Auskerbung,
- Fig. 4: eine der Fig. 2 entsprechende Darstellung, mit in beiden Konsolen vorgesehenen, erfindungsgemäß gestalteten Langlöchern,
- Fig. 5: einen Schraubbolzen mit kopf- und mutterseitig vorgesehener Auskerbung,
- Fig. 6 u. 7: eine Beilagscheibe mit einseitigem Formansatz, und
- Fig. 8: eine Schemadarstellung zur Verdeutlichung der Abstützung des Schraubbolzens in seiner zentralen Lage zwischen den Nasenrücken und bei Überdeckung der Nase mit der Auskerbung.

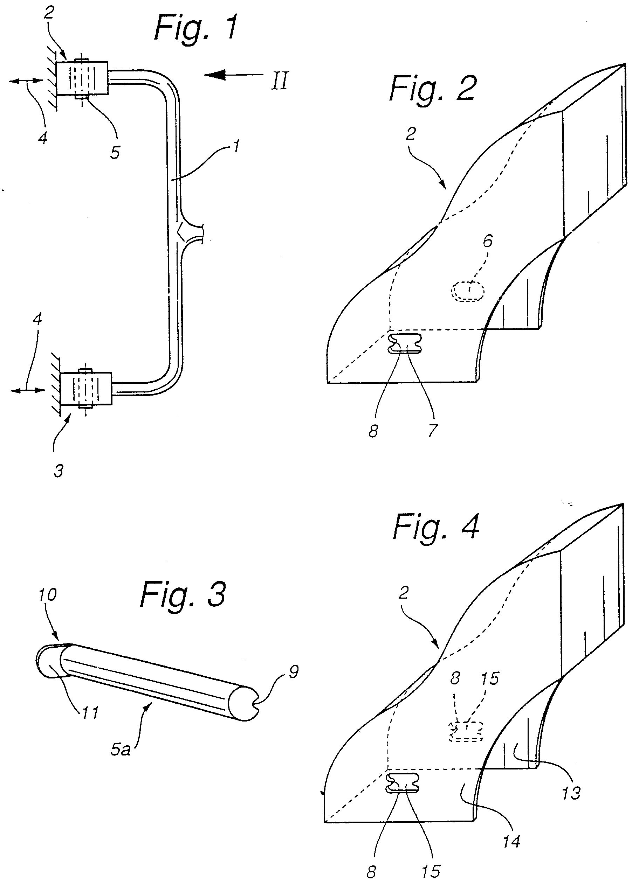

In der Darstellung gemäß Fig. 1 ist mit 1 ein Radführungslenker bezeichnet, der in zwei Konsolen 2 und 3 an dem Fahrzeugaufbau gehalten ist, wobei durch Querverstellung der Anlenkungen des Radführungslenkers 1 in den Konsolen 2, 3 Sturz- und/oder Nachlauf für das vom Führungslenker 1 geführte, nicht dargestellte Rad veränderbar sind. Die gegebenen Verstellrichtungen sind durch die Pfeile 4 symbolisiert.

In Fig. 2 ist schematisch eine perspektivische Darstellung einer solchen Konsole 2 gezeigt, und zwar bei Blickrichtung entsprechend dem Pfeil II. Der Radführungslenker ist nicht dargestellt, ebenso wenig einer der zur Befestigung des Radführungslenkers in den Konsolen verwendeten, in Fig. 1 schematisch dargestellten und mit 5 bezeichneten Schraubbolzen.

Für diese Schraubbolzen sind in den Konsolen entsprechend der Verstellrichtung der Pfeile 4 angeordnete Langlochführungen 6 und 7 vorgesehen, wobei die dem Schraubenkopf zugeordnete Langlochführung in Fig. 2 mit 6 und die dem Gewindeteil des Schraubbolzens zugeordnete Langlochführung, also die mutternseitige Langlochführung mit 7 bezeichnet ist.

Wird in eine Konsole gemäß Fig. 2 ein Schraubbolzen eingesetzt, der beispielsweise kopfseitig nach beiden Seiten mit einem in das Langloch 6 eingreifenden Formansatz versehen ist, so ist der Schraubbolzen kopfseitig in dem Langloch 6 auf seine Mittellage zentriert. Die entsprechende Zentrierung gewindeseitig ergibt sich durch die im Langloch 7 vorgesehenen Zentriernasen 8, die auf den Durchmesser des Schraubbolzens in ihrer Abmessung abgestimmt sind und quasi mit ihrem Nasenrücken den Schraubbolzen führen.

Soll für den Radlenker 1 in einer der Konsolen, also beispielsweise der Konsole 2 eine der möglichen, außermittigen Endlagen für einen Schraubbolzen 5 realisiert sein, so muß ein Schraubbolzen 5a gemäß Fig. 3 Verwendung finden, der für das Langloch 7 eine entsprechende außermittige Lage des Schraubbolzens 5a dadurch ermöglicht, daß er mit einer in Richtung des Schraubbolzens verlaufenden Auskerbung 9 versehen wird. In Gegenrichtung zu dieser Auskerbung 9 ist der Schraubbolzen 5a auf der Rückseite des Kopfes 10 mit einem sich lediglich nach einer Seite erstreckenden Formansatz 11 versehen, der auf der der Auskerbung gegenüberliegenden Seite bei Verschiebung des Schraubbolzens bis an die entsprechende Stirnseite des Langloches 6 dieses nach der Gegenseite ausfüllt und dadurch eine Fixierung des Schraubbolzens 5a in der entsprechenden Endlage sicherstellt.

Findet eine erfindungsgemäße Lösung Verwendung, bei der gemäß Fig. 4 in beiden Schenkeln 13 und 14 der Konsole 2 jeweils ein Langloch 15 mit Zentriernasen 8 Verwendung findet, dann ist; bezogen auf einen runden Querschnitt aufweisenden Schraubbolzen dieser sowohl kopfseitig wie auch mutterseitig zentriert.

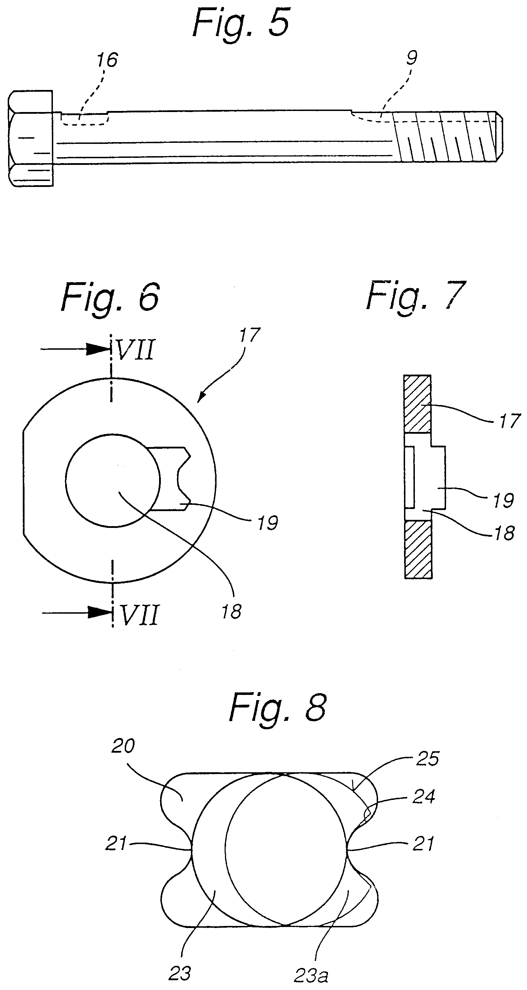

Soll eine exzentrische Endlage für den Schraubbolzen sichergestellt werden, so ist ein Schraubbolzen gemäß Fig. 5 mit einer Auskerbung 9 im Mutterbereich und einer weiteren Auskerbung 16 im Kopfbereich vorzusehen, wobei die Auskerbungen 9 und 16 den entsprechenden Nasen 8 in den Langlöchern 15 entsprechen müssen.

Figuren 6 und 7 zeigen Beilagscheiben 17, wie sie Verwendung finden, wenn ein Schraubbolzen gemäß Fig. 5 in exzentrischer Endlage in Langlöchern 15 gemäß Fig. 4 fixiert werden soll. Die Beilagscheiben 17 weisen eine zentrale Führungsbohrung 18 für den Schraubbolzen auf, und sie sind ferner, wie bei 19 dargestellt, mit einem Formansatz versehen, der bei exzentrischer Lage des Schraubbolzens im jeweiligen Langloch den Freiraum zwischen dem Bolzen und der von der Auskerbung abgelegenen Nase des Langloches ausfüllt. Hierdurch ist der Schraubbolzen in seiner jeweiligen exzentrischen Lage über die Beilagscheibe fixiert.

Fig. 8 zeigt in vergrößerter Darstellung die Ausbildung eines Langloches 20 mit gegenüberliegenden Zentriernasen 21 und einem Schraubbolzen 23 in zentraler Lage, in der der Schraubbolzen zwischen den Rücken der Nasen 21 geführt ist. Der Schraubbolzen 23 ist mit verdickter Umfangslinie dargestellt. Nimmt der Schraubbolzen, nunmehr mit 23a bezeichnet und in dünnerer Umfangslinie dargestellt, eine exzentrische Lage ein, so überdeckt die Nase 21 sich mit einer Auskerbung 24, wobei aus dieser vergrößerten Darstellung ersichtlich ist, daß sich eine Berührung zwischen der Auskerbung 24 und der Nase 21 lediglich im unmittelbaren Nasenrückenbereich, also im Scheitel der Nase 21 und im Grund der Auskerbung 24 ergeben soll. Im weiteren ist die Auskerbung, wie ersichtlich, insbesondere gegen den Umfang 25 des Bolzens zur Nase freiliegend, um Verformungen des Kantenbereiches im Übergang zum Umfang 25 des Formbolzens 23a zu vermeiden, die Beschädigungen des im Mutternbereich liegenden Gewindes des Schraubbolzens nach sich ziehen könnten.

Der Bolzen 23a ist rechtsseitig gegen die Nase 21 abgestützt, linksseitig verbleibt zwischen dem Bolzen 23a und der entsprechenden Nase 21 ein Freiraum. Dieser Freiraum wird bei Verwendung einer Beilagscheibe gemäß Fig. 6 und 7 zur Abstützung des Bolzens im Langloch durch den dort vorgesehenen Formansatz 19 der Beilagscheibe 17 ausgefüllt.

## Patentansprüche

1. Lagerveränderliche Anlenkung mit einer Schraubbolzen-Mutterverbindung, insbesondere für Radlenker (1) von Kraftfahrzeugen bei der Schraubbolzen (5, 5a) zwei einander mit Abstand gegenüberliegende Schenkel (13, 14) einer Halterung durchsetzt und quer zu seiner Erstreckung lageveränderlich gegenüber den Schenkeln in wenigstens bei beiderseits seiner Mittellage gegebenen Endlagen fixierbar ist, wobei in zumindest einem der Schenkel als Schraubbolzenaufnahme eine sich in Verstellrichtung erstreckende Langlochführung (7, 15, 20) vorgesehen ist,
**dadurch gekennzeichnet,**
daß die Langlochführung (7, 15, 20) von ihren endseitigen Stirnseiten ausgehende, gegen die Mitte sich erstreckende Nasen (8, 21) aufweist, deren Nasenrücken eine der Schraubbolzenmittellage entsprechende Führung bilden und daß zur Festlegung des Schraubbolzens (5, 5a) in einer von der Mittellage abweichenden Endlage schraubbolzenseitig eine die jeweilige Nase aufnehmende Auskerbung (9) vorgesehen ist und zur Abstützung in Gegenrichtung ein in das Langloch (7) eingreifender Anschlag (19).

2. Lageveränderliche Anlenkung nach Anspruch 1,
**dadurch gekennzeichnet,**
daß der Anschlag einer eine Führungsbohrung (18) für den Schraubbolzen aufweisenden Beilagscheibe (17) zugeordnet ist.

3. Lageveränderliche Anlenkung nach Anspruch 2,
**dadurch gekennzeichnet,**
daß der Anschlag durch einen Formansatz (19) der Beilagscheibe (17) gebildet ist.

4. Lageveränderliche Anlenkung nach Anspruch 1,
**dadurch gekennzeichnet,**
daß dem mutterseitigen Schenkel der Halterung eine Langlochführung (7) mit Zentriernasen (8) zugeordnet ist.

5. Lageveränderliche Anlenkung nach Anspruch 1,
**dadurch gekennzeichnet,**
daß beiden Schenkeln (13, 14) der Halterung eine Langlochführung mit Zentriernasen (8) zugeordnet ist.

6. Lageveränderliche Anlenkung nach Anspruch 5,
**dadurch gekennzeichnet,**
daß den Nasen der Langlochführungen (15) beider Schenkel (13, 13) der Halterung entsprechende, schraubbolzenseitige Auskerbungen (9, 16) im Kopf- und im Mutterbereich des Schraubbolzens zugeordnet sind.

## Claims

1. Variously positionable pivot joint having a nut and bolt connection, particularly for wheel guide arms (1) in motor vehicles, wherein a bolt (5, 5a) passes through two legs (13, 14) of a mounting, which lie opposite one another and are spaced apart, and can be fixed, variably in position transversely to its longitudinal direction relative to said legs, in at least two given end positions on each side of its central position, and wherein an oblong hole guide (7, 15, 20) extending in the direction of the adjustment is provided in at least one of the legs to receive the bolt, characterized in that the oblong hole guide (7, 15, 20) has, starting from its end faces, snugs (8, 21) which extend towards the centre and the backs of which form a guide corresponding to the central position of the bolt, and in that, for the purpose of fastening the bolt (5, 5a) in an end position different from the central position, a notch (9) receiving the respective snug is provided on the bolt and for the purpose of support in the opposite direction a stop (19) engaging in the oblong hole (7) is provided.

2. Variously positionable pivot joint according to Claim 1, characterized in that the stop is associated with a shim (17) having a guide bore (18) for the bolt.

3. Variously positionable pivot joint according to Claim 2, characterized in that the stop is in the form of a shaped projection (19) on the shim (17).

4. Variously positionable pivot joint according to Claim 1, characterized in that an oblong hole guide (7) having centring snugs (8) is associated with the mounting leg on the nut side.

5. Variously positionable pivot joint according to Claim 1, characterized in that an oblong hole guide having centring snugs (8) is associated with each leg (13, 14) of the mounting.

6. Variously positionable pivot joint according to Claim 5, characterized in that notches (9, 16) provided on the bolt and corresponding to the snugs of the oblong hole guides (15) of both legs (13, 13) of the mounting are associated with the head and nut regions of the bolt.

## Revendications

1. Articulation à position variable, comprenant une liaison corps de boulon-écrou, notamment pour bras de suspension (1) de véhicules automobiles, dans laquelle un corps de boulon (5, 5a) traverse deux branches (13, 14) d'un support disposées face à face à un certain écartement, et peut être immobilisé par rapport aux branches, dans au moins deux positions extrêmes situées de part et d'autre de sa position centrale de façon réglable en position transversalement à sa longueur, au moins une des branches présentant en tant que logement de corps de boulon, un guidage à trou allongé (7, 15, 20) orienté dans la direction du réglage, caractérisée en ce que le guidage (7, 15,20) à trou allongé présente des dents (8, 21) en saillie sur ses côtés frontaux terminaux, lesdites dents s'étendent vers le milieu, les dos des dents formant un guidage qui correspond à la position centrale du corps de boulon, en ce que, pour le blocage du corps de bouton (5, 5a), il est prévu sur le corps de bouton, dans une position extrême différente de la position centrale, une encoche (9) qui reçoit la dent correspondante et en ce que, pour donner appui dans le sens inverse, il est prévu une butée (19) qui s'engage dans le trou allongé (7).

2. Articulation à position variable selon la revendication 1, caractérisée en ce que la butée est associée à une rondelle (17) qui présente un perçage de guidage (18) pour le corps de boulon.

3. Articulation à position variable selon la revendication 2, caractérisée en ce que la butée est formée par un appendice de forme (19) de la rondelle (17).

4. Articulation à position variable selon la revendication 1, caractérisée en ce qu'un guidage à trou allongé muni de dents de centrage (8) est associé à la branche côté écrou du support.

5. Articulation à position variable selon la revendication 1, caractérisée en ce qu'un guidage à trou allongé muni de dents de centrage (8) est associé à chacune des deux branches (13, 14) du support.

6. Articulation à position variable selon la revendication 5, caractérisée en ce qu'aux dents des guidages à trou allongé (15) des deux branches (13, 14) du support, sont associées des encoches correspondantes (9, 16) du corps de boulon qui sont prévues dans les régions de la tête et de l'écrou du corps de boulon.
